# EUROPEAN PATENT APPLICATION

(11) **EP 1 631 049 A1**
(43) Date of publication of application: **01.03.2006**
(21) Application number: 05018713.7
(22) Date of filing: 29.08.2005
(51) Int. Cl.: H04M 1/725

(54) **Apparatus and method for controlling music play in a mobile communication terminal using a motion recognition sensor**

(30) Priority: 27.08.2004 KR 2004067862; 26.02.2005 KR 2005016294; 12.04.2005 KR 2005030528
(71) Applicant: Samsung Electronics Co., Ltd., Suwon-si, Gyeonggi-Do (KR)
(72) Inventor: Han, Myoung-Hwan Samsung Electronics Co., Ltd., Suwon-si Gyeonggi-do (KR); Hwang, Byeong-Cheol Samsung Electronics Co., Ltd., Suwon-si Gyeonggi-do (KR); Park, Jae-Hyun Samsung Electronics Co., Ltd., Suwon-si Gyeonggi-do (KR); Kang, Myung-Ji Samsung Electronics Co., Ltd., Suwon-si Gyeonggi-do (KR); Yi, Sun-Young Samsung Electronics Co., Ltd., Suwon-si Gyeonggi-do (KR); Shin, Seung-Woo Samsung Electronics Co., Ltd., Suwon-si Gyeonggi-do (KR); Yun, Joong-Sam Samsung Electronics Co., Ltd., Suwon-si Gyeonggi-do (KR); Seo, Jin-Gyu Samsung Electronics Co., Ltd., Suwon-si Gyeonggi-do (KR); Kim, Ja-Young Samsung Electronics Co., Ltd., Suwon-si Gyeonggi-do (KR)
(74) Representative: Grünecker, Kinkeldey, Stockmair & Schwanhäusser Anwaltssozietät

(57) **Abstract**

Disclosed are an apparatus and a method for controlling music play in a mobile communication terminal. The apparatus includes a motion recognition sensor unit (50) for detecting a motion of the mobile communication terminal and outputting detection signals, a sound source chip for outputting sound (80), and a controller for receiving the detection signals from the motion recognition sensor unit, calculating motion values of the mobile communication terminal, and controlling the sound source chip to output sounds dependent on the calculated motion values (10). The apparatus includes a user interface (40) required for the music play, a display unit (30) for displaying music to be played, a motion recognition sensor unit for detecting a motion of the mobile terminal (50), a sound file storage unit (20) including an area for storing at least one music information, a controller (10) for controlling corresponding music to be played according a motion of the mobile terminal, and a speaker (74) for outputting sounds of the played music.

## Description

The present invention relates to an apparatus and a method for utilizing a mobile communication terminal for entertainment, and more particularly to an apparatus and a method for controlling music play in a mobile communication terminal recognizing continuous motion through a motion recognition sensor unit.

Recently, portable mobile communication terminals such as cell phones and Personal Digital Assistants (PDAs) have achieved wide spread use. With the development of communication technology, these mobile communication terminals are providing additional functions such as game, alarm and MP3 player functions using various images and sounds in addition to communication functions such as telephone and Short Message Service (SMS) functions. Accordingly, mobile communication terminal users enjoy various conveniences in using the terminals as well as the original communication function.

However, users require that mobile communication terminals always carried by the users also have more interesting functions. Accordingly, mobile communication terminal manufacturers have tried to develop other interesting functions by means of an existing sound output function, display function, etc.

Typically, a beatbox (electronic percussion on drum machine) through a motion recognition sensor unit (e.g., an inertia sensor) allows a corresponding musical performance to be played by means of instrumental sounds previously stored in a mobile communication terminal. Further, a beatbox outputs sounds from preset sound sources whenever a user shakes a mobile communication terminal. While the sounds are outputted, a background scene is fixed to one image. Types of sound sources used in a sound function through a motion recognition sensor unit may be restricted. When these restricted instrument sound sources are used, enjoyment obtained by utilizing the sound function by users may also be restricted. Further, it may be impossible for users unskilled with musical beats to enjoy a beatbox play function. Furthermore, when a background scene is fixed to one image during the sound function, it may be visually unimpressive as compared with the output sound.

Accordingly, the present invention has been made to solve the above-mentioned problems occurring in the prior art.

It is the object of the present invention to provide an apparatus, in which a user can play an interesting game using a mobile communication terminal, and a control method thereof.

This object is solved by the subject matter of the independent claims.

Preferred embodiments are defined by the subject matter of the dependent claims.

It is an aspect of the present invention to provide an apparatus, in which a mobile communication terminal can output sounds in response to a user's motion, and a control method thereof.

It is a further aspect of the present invention to provide an apparatus and a method which can improve the interest a user experiences by increasing the degree of freedom in using a sound function [beatbox, music box (electronic sound synthesizer), etc] of a mobile communication terminal having a motion recognition sensor unit.

It is another aspect of the present invention to provide an apparatus and a method which can utilize a sound function as various sound sources in addition to sound sources included in a mobile communication terminal.

It is yet another aspect of the present invention to provide an apparatus and a method, in which a user follows and learns beats according to types of music in learning a beatbox, thereby increasing a users interest in learning the beatbox.

It is yet another aspect of the present invention to provide an apparatus and a method which can provide an enjoyable experience from a visual standpoint as well as an auditory standpoint when a sound function is used in displaying a background scene.

In order to accomplish the above, according to one aspect of the present, there is provided an apparatus for controlling music play in a mobile communication terminal, the apparatus including a motion recognition sensor unit for detecting a motion of the mobile communication terminal and outputting detection signals; a sound source chip for outputting sound; and a controller for receiving the detection signals from the motion recognition sensor unit, calculating motion values of the mobile communication terminal, and controlling the sound source chip to output sounds dependent on the calculated motion values.

In order to accomplish the above, according to another aspect of the present, there is provided a method for controlling music play in a mobile communication terminal, the method including determining if a motion of the mobile communication terminal exists; calculating motion values of the mobile communication terminal when the motion of the mobile communication terminal exists; and outputting sounds dependent on the calculated motion values.

In order to accomplish the above, according to further another aspect of the present, there is provided an apparatus for controlling music play in a mobile communication terminal, the apparatus including a user interface for user input required for the music play; a display unit for displaying an information screen for music to be played; a motion recognition sensor unit for instantaneously detecting a motion of the mobile communication terminal; a sound file storage unit including an area for storing at least one music information; a controller for controlling corresponding music to be played according to a motion of the mobile communication terminal detected by the motion recognition sensor unit; and a speaker for outputting sounds of the played music.

In order to accomplish the above, according to still another aspect of the present invention, there is provided a method for controlling music play in a mobile communication terminal, the method including displaying a screen for changing beatbox setup; and displaying a screen for guiding a user to learn a beatbox while outputting the beatbox according to a corresponding state when a play command is input in a state where the beatbox has been set or in an initial setting state.

In order to accomplish the above, according to yet another aspect of the present, there is provided a method for controlling music play in a mobile communication terminal, the method including displaying a screen for selecting a tune to be played by a music box; displaying an information screen for the selected tune; and outputting sounds corresponding to musical notes of the tune whenever a motion of the mobile communication terminal is detected.

The above object and other aspects, features and advantages of the present invention will be more apparent from the following detailed description taken in construction with the accompanying drawings in which:
FIG. 1 is a block diagram of a mobile communication terminal according to an embodiment of the present invention;
FIG. 2 is a flow diagram illustrating a control flow for generating sounds dependent on a motion of a mobile communication terminal according to the present invention;
FIG. 3 is a flow diagram illustrating a control flow for generating the sounds dependent on a motion of a mobile communication terminal according to a preferred embodiment of the present invention;
FIG. 4 is a diagram of a screen when sounds are generated in a mobile communication terminal according to a preferred embodiment of the present invention;
FIG. 5 is a flow diagram illustrating a control flow for generating sounds dependent on a motion of a mobile communication terminal according to another preferred embodiment of the present invention;
FIG. 6 is a diagram of a screen when sounds are generated in a mobile communication terminal according to another preferred embodiment of the present invention;
FIG. 7 is a diagram illustrating a beatbox-learning-setting method based on a screen-by-screen change in a mobile communication terminal according to a preferred embodiment of the present invention;
FIG. 8 is a diagram illustrating a beatbox-learning-play method based on screen-by-screen change in a mobile communication terminal according to a preferred embodiment of the present invention;
FIG. 9 is a diagram illustrating a method for customizing "my instrument" based on screen-by-screen change in a mobile communication terminal according to a preferred embodiment of the present invention;
FIG. 10 is a diagram illustrating a method for checking "my instrument" based on screen-by-screen change in a mobile communication terminal according to a preferred embodiment of the present invention;
FIG. 11 is a diagram illustrating a music-box-play method based on screen-by-screen change in a mobile communication terminal according to a preferred embodiment of the present invention;
FIG. 12 is a block diagram of a mobile communication terminal according to another preferred embodiment of the present invention;
FIG. 13 is a flow diagram illustrating a beatbox-learning-setting method in a mobile communication terminal according to a preferred embodiment of the present invention;
FIGs. 14a and 14b are flow diagrams illustrating a beatbox-learning-play method in a mobile communication terminal according to a preferred embodiment of the present invention;
FIG. 15 is a diagram illustrating a method for customizing "my instrument" in a mobile communication terminal according to a preferred embodiment of the present invention;
FIG. 16 is a diagram illustrating a method for checking "my instrument" in a mobile communication terminal according to a preferred embodiment of the present invention;
FIG. 17 is a diagram illustrating a music-box-play method in a mobile communication terminal according to a preferred embodiment of the present invention; and
FIG. 18 is a diagram illustrating a method for changing a background scene in a mobile communication terminal according to a preferred embodiment of the present invention.

Hereinafter, preferred embodiments according to the present invention will be described with reference to the accompanying drawings. In the following description, particular items such as a detailed display (design) of a menu screen are shown, but these are provided for helping the general understanding of the present invention. It will be understood by those skilled in the art that these elements may be modified within the scope of the present invention. In the following description of the present invention, a detailed description of known functions and configuration incorporated herein will be omitted when it may make the subject matter of the present invention unclear.

The present invention provides a function for outputting sounds dependent on the motion of a mobile communication terminal. For this purpose, the present invention detects the motion of a mobile communication terminal, calculates motion values of the detected motion, and outputs sounds dependent on a corresponding motion value. The sounds may be output in a way preset by a user.

Accordingly, a user controls the motion of a mobile communication terminal, thereby enabling sounds to be output as the user wants. For example, interesting sounds may be output in different settings such as a concert hall or a karaoke.

A function of learning a beatbox according to a preferred embodiment of the present invention includes a screen for setting types, sound sources and volume of the beatbox to be learned, and a screen for imitating and learning the beatbox. The learning the beatbox is carried out in such a manner that beats selected by a user are output bar by bar and the user imitates the corresponding bars. Further, in order to learn the beatbox, the user selects already stored beats, instruments and volume. When the learning starts, the user can learn the beat while imitating the beat bar by bar.

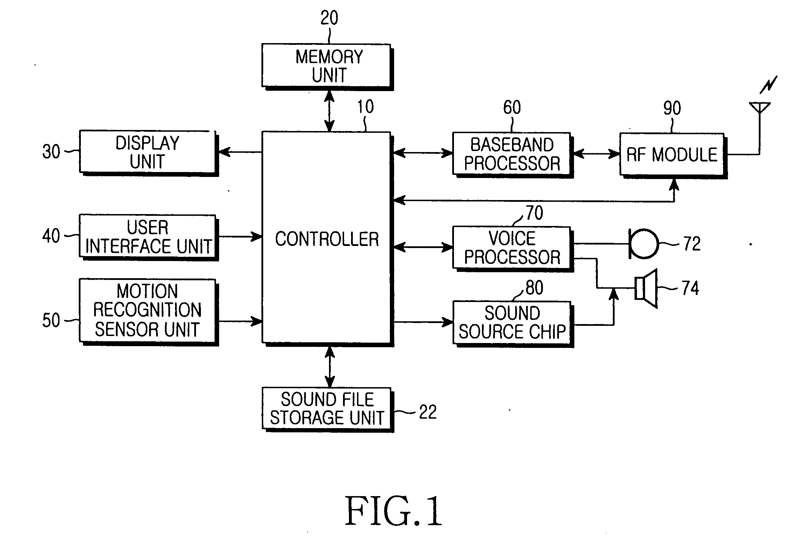

FIG. 1 is a block diagram of a mobile communication terminal according to an embodiment of the present invention. A controller 10 controls operations of the mobile communication terminal such as communication and data transmission/reception. When the motion of the mobile communication terminal exists, the controller 10 controls sounds dependent on a corresponding motion value to be output. The motion of the mobile communication terminal is detected by a motion recognition sensor unit 50.

It is preferred that the motion recognition sensor unit 50 may include a gyro sensor. The gyro sensor is a sensor using an angular momentum in order to detect an angular motion with respect to an inertia space around one or more axes orthogonal to a spin axis.

The motion recognition sensor unit 50 instantaneously detects the motion of the mobile communication terminal. That is, when the mobile communication terminal moves, the motion recognition sensor unit 50 outputs detection signals representing the motion of the mobile communication terminal in a horizontal and a vertical (back and forth or right and left) direction. The motion recognition sensor unit 50 may be embodied by a sensor outputting the detection signals based on the motion of the mobile communication terminal.

The controller 10 recognizes the reciprocating motion of the mobile communication terminal by means of the detection signals output from the motion recognition sensor unit 50. Further, the controller 10 calculates motion values of the mobile communication terminal by means of the detection signals output from the motion recognition sensor unit 50. Furthermore, the controller 10 controls sounds to be output through a sound source chip 80 according to the motion values of the mobile communication terminal.

When sound data of a sound file such as a musical instrument digital interface (MIDI) are input from the controller 10, the sound source chip 80 converts the input sound data into analog signals audible to a user and outputs the analog signals. According to the embodiment of the present invention, it is preferred that the sound source chip 80 is a high performance sound source chip for outputting the tone of a piano, a guitar, a drum, etc., as if its original tone is output.

When the detection signals based on the motion of the mobile communication terminal are received from the motion recognition sensor unit 50 after a predetermined instrument is selected by a user, the controller 10 recognizes the reciprocating motion of the mobile communication terminal and controls the sounds of the instrument selected by the user to be output through the sound source chip 80 according to the reciprocating motion.

For example, when the user shakes the mobile communication terminal after selecting a tambourine from a karaoke, the controller 10 detects the motion of the mobile communication terminal and outputs tambourine sounds dependent on the motion of the mobile communication terminal. Accordingly, the user can hear sounds similar to that made when a tambourine is actually shaken.

Further, when the detection signals based on the motion of the mobile communication terminal are received from the motion recognition sensor unit 50 after a predetermined sound file is selected by a user, the controller 10 recognizes the motion of the mobile communication terminal and controls sounds, which correspond to each note of music in a sound file selected by the user, to be output through the sound source chip 80 in sequence according to the motion.

For example, when the user shakes the mobile communication terminal after selecting a sound file " twinkle twinkle little star", the controller 10 outputs notes corresponding to the motion of the mobile communication terminal, i.e., sounds corresponding to " do-do-sol-sol-la-la-sol". The output sounds may be sounds from the instrument set by the user.

Further, the controller 10 may control an image proper for the output sounds to be displayed through a display unit 30. For example, the controller 10 may display a dynamic image or an image, of each instrument being played, on the display unit 30. Further, the controller 10 may display a musical note representing music in a sound file and indicate notes corresponding to currently output sounds for discernment on the display unit 30.

The display unit 30 displays various messages, etc., under the control of the controller 10, and may include a Liquid Crystal Display (LCD), a Thin Film Transistor (TFT), an Organic Electroluminescence (EL), etc. A user interface unit 40 includes a plurality of number keys and function keys and outputs key input data corresponding to keys pressed by the user to the controller 10.

Further, a memory unit 20 connected to the controller 10 includes a Read Only Memory (ROM) and a Random Access Memory (RAM) for storing a plurality of programs and information required for controlling operations of the mobile communication terminal, a voice memory, etc. A sound file storage unit 22 stores a plurality of sound files, and these sound files may be downloaded through the Internet, etc., by the user.

Herein, the sound file may include data regarding predetermined percussion instrument sounds, or data regarding specific music. When the sound file includes the data regarding specific music, the sound file may include a predetermined indicator allowing the controller 10 to discern notes constituting the music according to the embodiment of the present invention. Further, the sound file may include a predetermined indicator allowing the controller 10 to discern beats corresponding to the music according to another embodiment of the present invention. Accordingly, when the sound file includes the indicator required for discerning the beats, the controller 10 may output sounds corresponding to each beat based on the motion of the mobile communication terminal.

The mobile communication terminal typically performs wireless communication with a base station. For this, a Radio Frequency (RF) module 90 transmits/receives RF signals with the base station (not shown) through an antenna. In detail, the RF module 90 converts the received RF signals to Intermediated Frequency (IF) signals and outputs the IF signals to a baseband processor 60. Further, the RF module 90 converts IF signals input from the baseband processor 60 to RF signals, and transmits the RF signals. The baseband processor 60, a Baseband Analog ASIC (BAA) providing an interface between the controller 10 and the RF module 90, converts baseband digital signals applied from the controller 10 to analog IF signals, and applies the analog IF signals to the RF module 90. Further, the baseband processor 60 converts analog IF signals applied from the RF module 90 to baseband digital signals, and applies the baseband digital signals to the controller 10. A voiceband signal processor 70 connected to the controller 10 is connected to a microphone 72 and a speaker 74. The microphone 72 converts sounds input for recording, communication, etc., to electrical signals. The speaker 74 converts electrical signals to sounds and outputs the sounds, thereby enabling the user to hear the music play. The voiceband signal processor 70 digitally processes the electrical signals input from the microphone 72, and converts the digital signals into analog signals for output to the speaker 74.

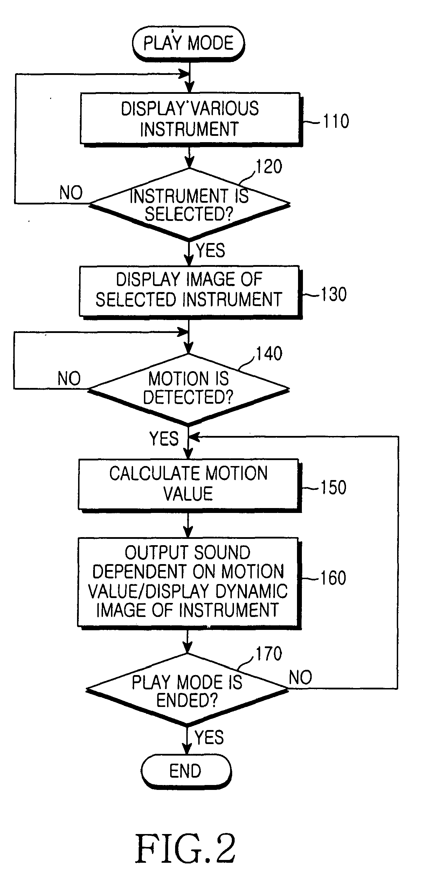

FIG. 2 is a flow diagram illustrating a control flow for generating sounds dependent on the motion of the mobile communication terminal according to the present invention. When a user selects a play mode, the controller 10 displays various instruments on the display unit 30 in step 110. Herein, the displayed instruments may include drums, tambourines, pianos, violins, etc. In step 120, the controller 10 determines an instrument selected by the user from among the displayed instruments. It is preferred that the instrument is the tambourine in the description with reference to FIG. 2.

When the user has selected a predetermined instrument, the controller 10 displays an image of the selected instrument on the display unit 30 in step 130. Step 130 is a selective step which may be omitted from the flow diagram of FIG. 2. In step 140, the controller 10 determines if the mobile communication terminal is in motion through the motion recognition sensor unit 50. Herein, the motion of the mobile communication terminal includes a simple motion and an artificial motion which is a reciprocating motion by which the mobile communication terminal is shaken back and forth or right and left. For example, in order for a person to shake the tambourine and make a sound, it is necessary to shake the tambourine right and left faster than a predetermined speed. That is, the controller 10 determines if the mobile communication terminal is being shaken above a predetermined speed by means of the detection signals from the motion recognition sensor unit 50.

In step 150, the controller 10 calculates motion values based on the motion of the mobile communication terminal. When back and forth or right and left motion of the mobile communication terminal is detected through the motion recognition sensor unit 50, e.g., a gyro sensor, and signals from the detected motion are transferred to the controller 10, the controller 10 calculates the motion values according to the signals from the motion recognition sensor unit 50.

In step 160, the controller 10 outputs sounds dependent on the motion values and displays a dynamic image of the instrument selected by the user. The display of the dynamic image of the instrument is a selective step which may be omitted from the flow diagram of FIG. 2. In step 170, the controller 10 determines if the play mode has been ended. The play mode may be ended by the user, e.g., the play mode may be ended when a call is terminated. If the play mode has not been ended, steps 150 and 160 continue to be performed. That is, the controller 10 continuously calculates motion values and outputs sounds dependent on the motion values.

In this way, the mobile communication terminal user can hear the sounds as if an instrument is actually being played.

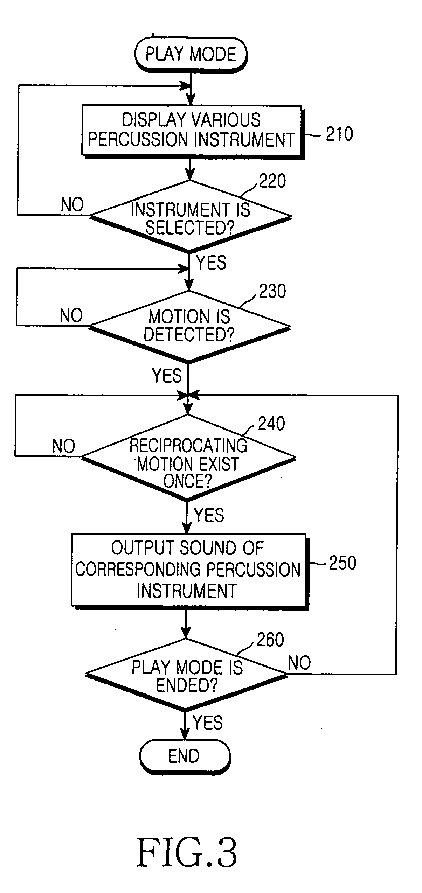

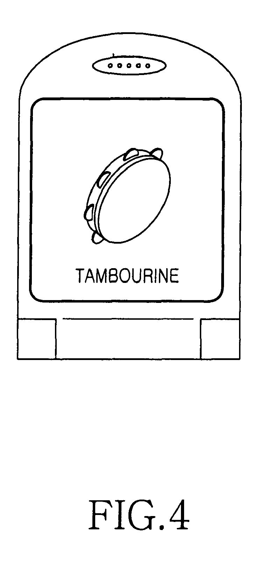

FIG. 3 is a flow diagram illustrating a control flow for generating the sounds dependent on the motion of the mobile communication terminal according to a preferred embodiment of the present invention, FIG. 4 is a diagram of a screen when the sounds are generated in the mobile communication terminal according to a preferred embodiment of the present invention.

Referring to FIG. 3, when a user selects a play mode, the controller 10 displays various percussion instruments on the display unit 30 in step 210. Herein, the percussion instruments may include drums, tambourines, etc. In step 220, the controller 10 determines a percussion instrument selected by the user from among the displayed percussion instruments.

When the user has selected a predetermined percussion instrument, the controller 10 determines if the mobile communication terminal is in motion through the motion recognition sensor unit 50 in step 230. Then, the controller 10 determines if a reciprocating motion of the mobile communication terminal has occurred once in step 240. That is, the controller 10 determines if the mobile communication terminal has reciprocated once more than a predetermined speed by means of the detection signals from the motion recognition sensor unit 50.

When the mobile communication terminal has reciprocated once, the controller 10 outputs sounds of the percussion instrument selected by the user, in step 250. The output sounds of the percussion instrument may be sounds which are output when hitting the percussion instrument once. In addition, the output sounds of the percussion instrument may be sounds which are output when hitting the percussion instrument twice. In step 260, the controller 10 determines if the play mode has been ended. As described above, the play mode may be ended by the user, e.g., the play mode may be ended when a call is terminated. When the play mode has not been ended, the control flow returns to step 240.

In the meantime, when the sounds according to the reciprocating motion of the mobile communication terminal are output, an image or a dynamic image as illustrated in FIG. 4 may also be displayed on the display unit 30.

As described above, because the sounds are output when the mobile communication terminal user shakes the mobile communication terminal after selecting the tambourine from a karaoke, etc., the user can hear the sounds similar to those when the tambourine is actually shaken.

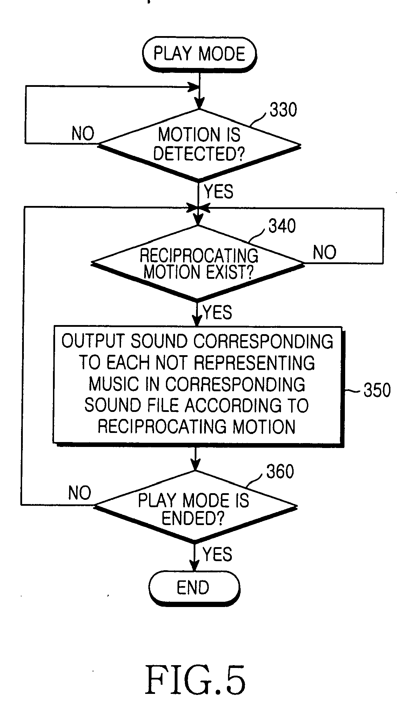

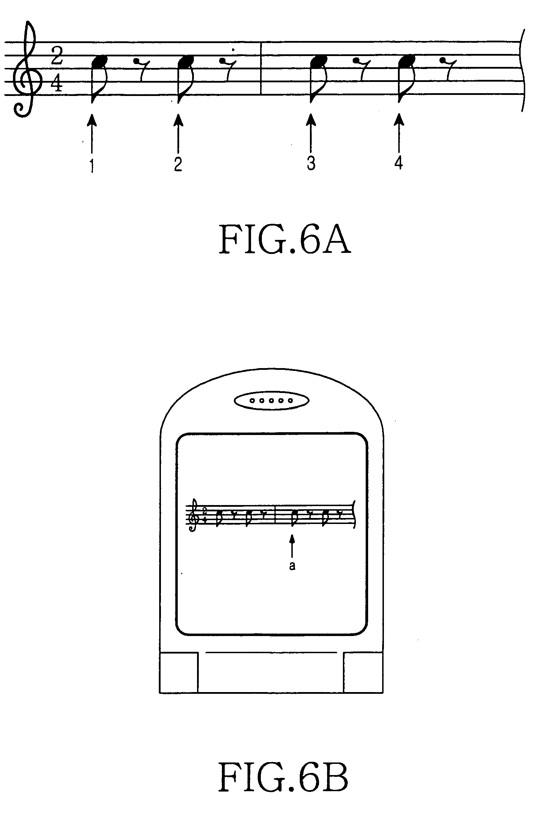

FIG. 5 is a flow diagram illustrating a control flow for generating the sounds dependent on the motion of the mobile communication terminal according to another preferred embodiment of the present invention, and FIG 6 is a diagram of a screen when the sounds are generated in the mobile communication terminal according to another preferred embodiment of the present invention.

When a user selects a play mode, the controller 10 determines if the mobile communication terminal is in motion through the motion recognition sensor unit 50 in step 330. Then, the controller 10 determines if a reciprocating motion of the mobile communication terminal has occurred in step 340. That is, the controller 10 determines if the mobile communication terminal has reciprocated more than a predetermined speed by means of the detection signals from the motion recognition sensor unit 50.

When the mobile communication terminal has reciprocated once, the controller 10 displays each note corresponding to the reciprocating motion and simultaneously outputs sounds in step 350.

One embodiment of the present invention may include a predetermined indicator allowing notes constituting music to be discerned.

In step 360, the controller 10 determines if the play mode has been ended. When the play mode has not been ended, the control flow returns to step 340.

When the sounds are output according to the reciprocating motion of the mobile communication terminal, images of those notes as illustrated in FIG. 6A may be displayed on the display unit 30 as shown in FIG. 6B. Further, according to the present invention, it is possible to indicate the note corresponding to the currently output sounds by means of an arrow "a" as illustrated in FIG. 6B.

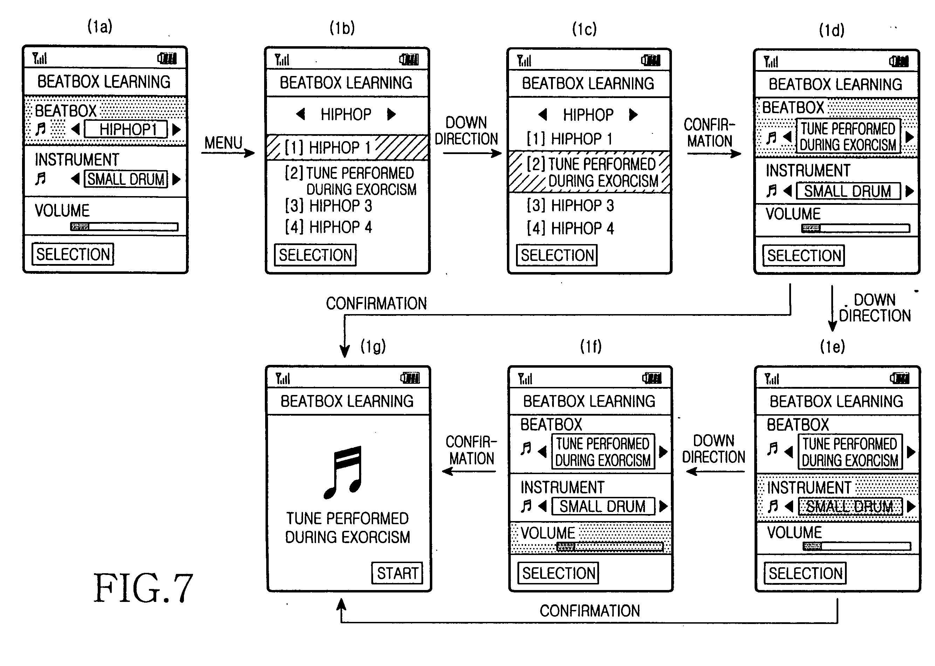

FIG. 7 is a diagram illustrating a beatbox-learning setting method based on screen-by-screen change in the mobile communication terminal according to a preferred embodiment of the present invention.

FIG. 7 (1a) is a diagram illustrating an exemplary initial screen for setting the beatbox learning. The "hiphop 1" of a beatbox item, the "small drum" of an instrument item, and the volume value are displayed by default, but may be adjusted as a user wants. That is, when the user presses a menu key in a state where a focus lies in the beatbox item, a sub-menu screen for displaying types of the beatbox is displayed as illustrated in FIG. 7 (1b), so that the user may select what the user wants by using an up and a down direction key. When the user selects Goodgery Rhythm, which is one of the Korean folk song's rhythms, by using the down direction key and presses a confirmation key as illustrated in FIG. 7 (1c), the "hiphop 1" of the beatbox item changes into Goodgery Rhythm as illustrated in FIG. 7 (1d). If the user is satisfied with the setup and does not want to change the instrument or the volume, the user directly presses the confirmation key. Accordingly, a beatbox-learning screen is displayed as illustrated in FIG. 7 (1g).

When the user wants to change the instrument types, the user presses the down direction key in the state of FIG. 7 (1d). Accordingly, the focus moves downward for selection of the instrument as illustrated in FIG. 7 (1e). Then, the detailed selection process of the instrument is the same as that for selecting the types of the beatbox as described above. Then, if the user is satisfied with the setup and does not want to change the volume, the user directly presses the confirmation key. Accordingly, the beatbox-learning screen is displayed as illustrated in FIG. 7 (1g).

If the user wants to change the volume value, the user presses the down direction key in the state of FIG. 7 (1e). Accordingly, the focus moves downward for selection of the volume as illustrated in FIG. 7 (1f). Herein, the user may adjust the volume by using a right and a left direction key. Then, when the user presses the confirmation key, the beatbox-learning screen is displayed as illustrated in FIG. 7 (1g).

After the beatbox-learning screen is displayed as illustrated in FIG. 7 (1g), a beatbox-learning play is performed as described later.

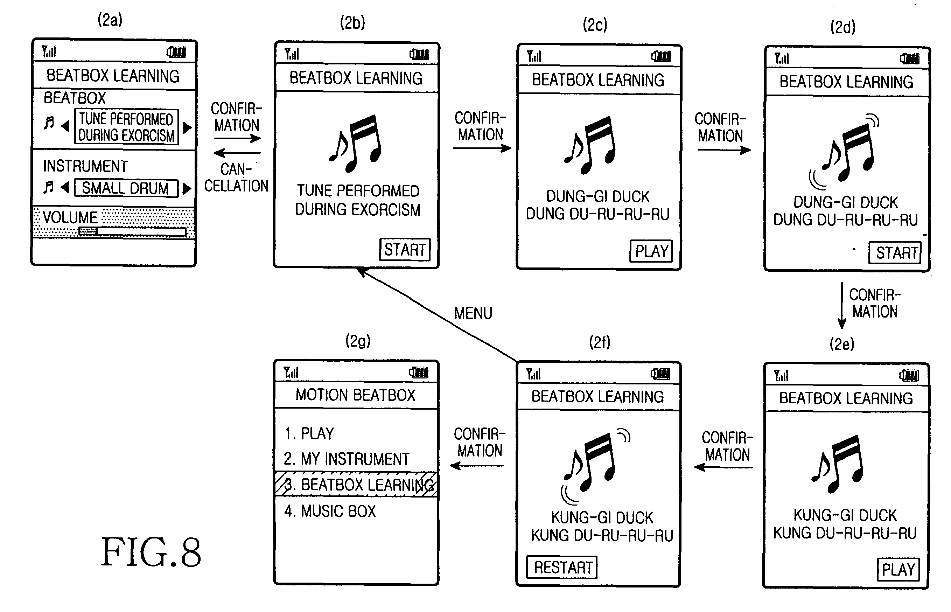

FIG. 8 is a diagram illustrating a beatbox-learning-play method based on screen-by-screen change in the mobile communication terminal according to a preferred embodiment of the present invention.

The beatbox-learning-play is performed through listening and imitation performed in turn, and the user may learn a selected beat through this process. A description will be given on an assumption that the user learns a beatbox of two bars.

FIG. 8 (2a) is a screen equivalent to that of FIG. 7 (1f) and shows a volume-setting step and subsequent steps assuming that the "Goodgery Rhythm" has been selected from the beatbox item and the "small drum" has been selected from the instrument item. When the user adjusts the volume by using the right and the left direction key and presses the confirmation key, the beatbox-learning screen is displayed as illustrated in FIG. 8 (2b), i.e., FIG. 7 (1g). If the user presses a cancel key in the state of FIG. 8 (2b), control flow returns to the state of FIG. 8 (2a) in order to allow the user to adjust the volume.

The first bar of Goodgery Rhythm is "dung-gi duck dung du-ru-ru-ru " and the second bar is "kung-gi duck kung du-ru-ru-ru".

FIG. 8 (2c) is a screen for listening to the first bar. Herein, a part of the beat is output. A "play" soft key is output after the beat reproduction is completed. When the user presses the confirmation key, a beatbox-imitation screen is displayed as illustrated in FIG. 8 (2d). Accordingly, the user has only to play the beat, which has been heard in the listening screen, in this imitation screen. Herein, when the user shakes the terminal, predetermined sounds are output based on the shake, so that the beatbox play is accomplished. However, when the user does not shake the terminal, the beatbox play is not accomplished because the predetermined sounds are not output.

Then, when the user presses the confirmation key, the screen for listening the second bar is displayed as illustrated in FIG. 8 (2e). Then, when the user presses the confirmation key again, the screen for imitating the second bar is displayed as illustrated in FIG. 8 (2f). Accordingly, the user has only to play the beat, which has been heard in the listening screen, in this imitation screen. Herein, when the user shakes the terminal, predetermined sounds are output based on the shake, so that the beatbox play is accomplished. However, when the user does not shake the terminal, the beatbox play is not accomplished because the predetermined sounds are not output. Then, when the user presses a menu key, the beatbox-learning screen is displayed as illustrated in FIG. 8 (2b). Then, when the user presses the confirmation key again, the motion beatbox initial screen is displayed as illustrated in FIG. 8 (2g).

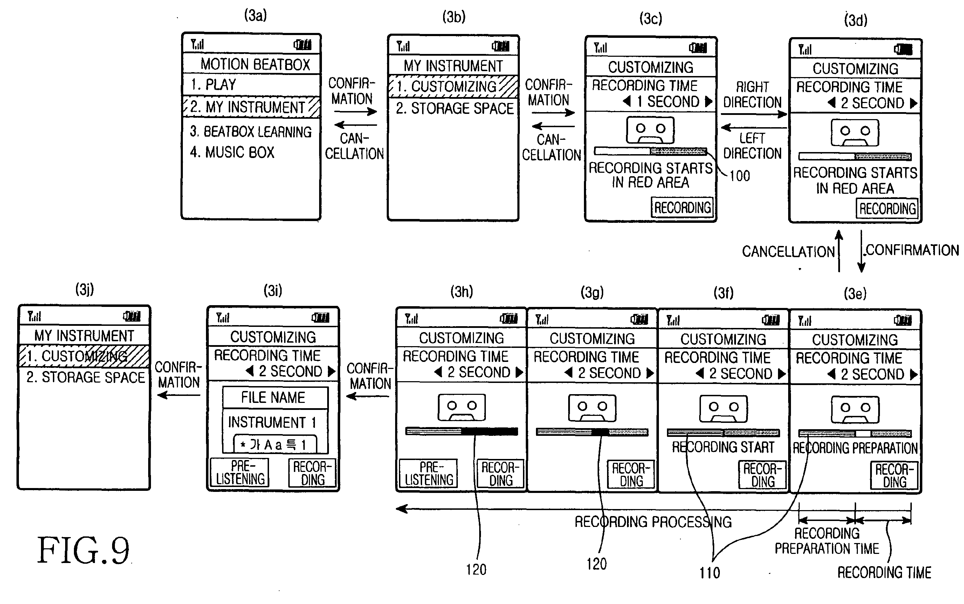

FIG. 9 is a diagram illustrating a method for customizing "My Instrument" based on a screen-by-screen change in the mobile communication terminal according to a preferred embodiment of the present invention.

In addition to the basic instruments, a user may customize "My Instrument" for use. The "My Instrument" item includes a customizing sub-item for recording sound sources and a storage space sub-item for reproducing or deleting the recorded sound sources. In order to record sound sources to be used as an instrument, recording time is first set. After the time is set, a bar graph reporting a time point at which the sound sources are recorded is shown, and the user makes the sounds of an instrument or voice to be used as the sound sources during the recording time. The sound sources recorded in this way may be used in the beatbox play and learning.

FIG. 9 (3a) is an initial screen for customizing the "My Instrument", i.e., the motion-beatbox screen. When the user moves a focus to the "My Instrument" item by using the up and the down direction key and presses the confirmation key, the "My Instrument" screen is displayed as illustrated in FIG. 9 (3b). When the user moves the focus to a customizing sub-item by using the up and the down direction key and presses the confirmation key, the "Customizing" screen is displayed as illustrated in FIG. 9 (3c). In this state, the user may set the recording time by using the right and the left direction key as illustrated in FIG. 9 (3d). When the recording time is set, the recording is performed through processes as illustrated in FIGs. 9 (3e) and (3h). Herein, the user may recognize a preparation 110, a start, an execution 120, and a completion of the recording through change in the bar graph. When the recording is completed, the screen for inputting a recording file name is displayed as illustrated in FIG. 9 (3i). When the user input the recording file name and presses the confirmation key, the "My Instrument" screen is displayed again as illustrated in FIG. 9 (3j) and the procedure ends.

When the user presses the cancel key in each state of FIGs. 9 (3b) to (3e), returns to the previous state.

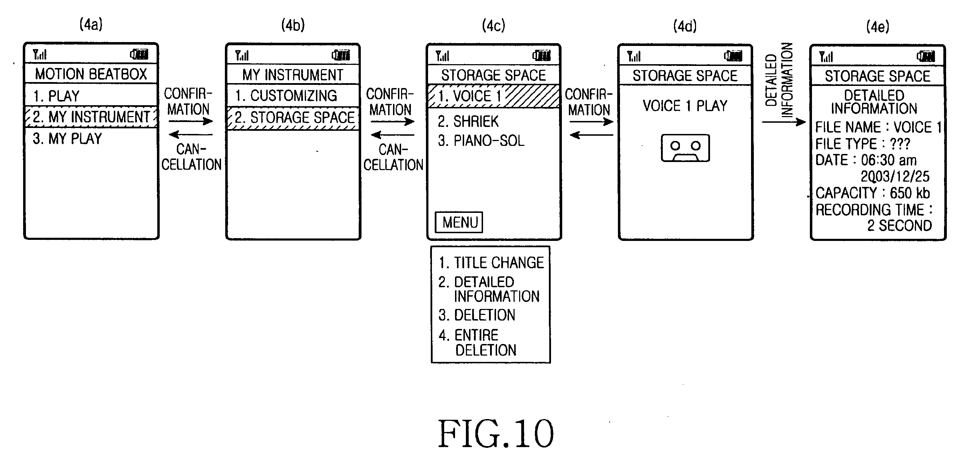

FIG. 10 is a diagram illustrating a method for checking the "My Instrument" based on a screen-by-screen change in the mobile communication terminal according to a preferred embodiment of the present invention.

FIG. 10 (4a) is an initial screen for checking the "My Instrument", i.e., the motion-beatbox screen. When the user moves the focus to the "My Instrument" item by using the up and the down direction key and presses the confirmation key, the "My Instrument" screen is displayed as illustrated in FIG. 10 (4b). When the user moves the focus to the storage space item by using the up and the down direction key and presses the confirmation key, the storage space screen is displayed as illustrated in FIG. 10 (4c). In this state, the user may move the focus by using the up and the down direction key. When the user presses the confirmation key in a state where the focus is located in a "Voice 1" item, the screen for checking the "Voice 1" is displayed as illustrated in FIG. 10 (4d). Further, when the user selects detailed information by using a "Menu" soft key below and presses the confirmation key, a detailed information screen for the "Voice 1" is displayed as illustrated in FIG. 10 (4e). For example, the detailed information may include file type, recording date, capacity, recording time, etc.

When the user presses the cancel key in each state of FIGs. 10 (4b) and (4c), returns to the previous state.

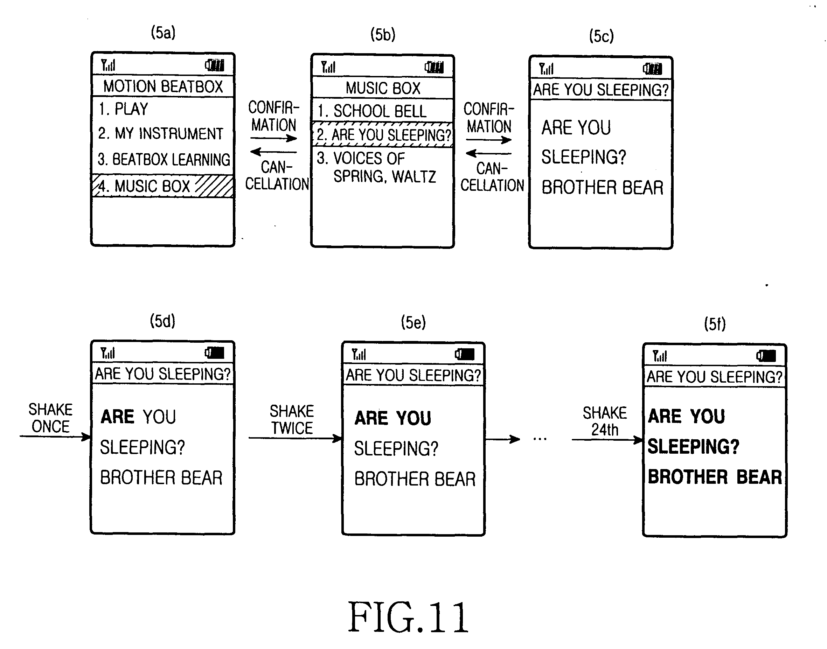

FIG. 11 is a diagram illustrating a music-box-play method based on screen-by-screen change in the mobile communication terminal according to a preferred embodiment of the present invention.

FIG. 11 (5a) is an initial screen for selecting the music box play, i.e., the motion-beatbox screen. When the user moves the focus to the music box item by using the up and the down direction key and presses the confirmation key, the music box menu screen is displayed as illustrated in FIG. 11 (5b). Herein, the music box menu screen displays a list of tunes to be played by the music box. When the user moves the focus to a tune "Are You Sleeping?" by using the up and the down direction key and presses the confirmation key as illustrated in FIG. 11 (5b), a predetermined quantity of words of the tune "Are You Sleeping?" are displayed with a first color (e.g., black) on the screen as illustrated in FIG. 11 (5c). When the user shakes first the terminal in the state of FIG. 11 (5c), sounds corresponding to the first musical note of the tune "Are You Sleeping?" are output and the color of words "Are" corresponding to the first musical note changes to a second color (e.g., blue) on the screen, as illustrated in FIG. 11 (5d). Further, when the user shakes the terminal again, sounds corresponding to the second musical note of the tune "Are You Sleeping?" are output and the color of words "You" corresponding to the second musical note changes to the second color on the screen, as illustrated in FIG. 11 (5e). As the tune "Are You Sleeping?" continues to be played, i.e., whenever the user shakes the terminal, sounds corresponding to each musical note are output and colors of corresponding words change. FIG. 11 (5f) shows a state where the user has shaken the terminal 11 times and thus all the words as illustrated in FIG. 11 (5c) have been played.

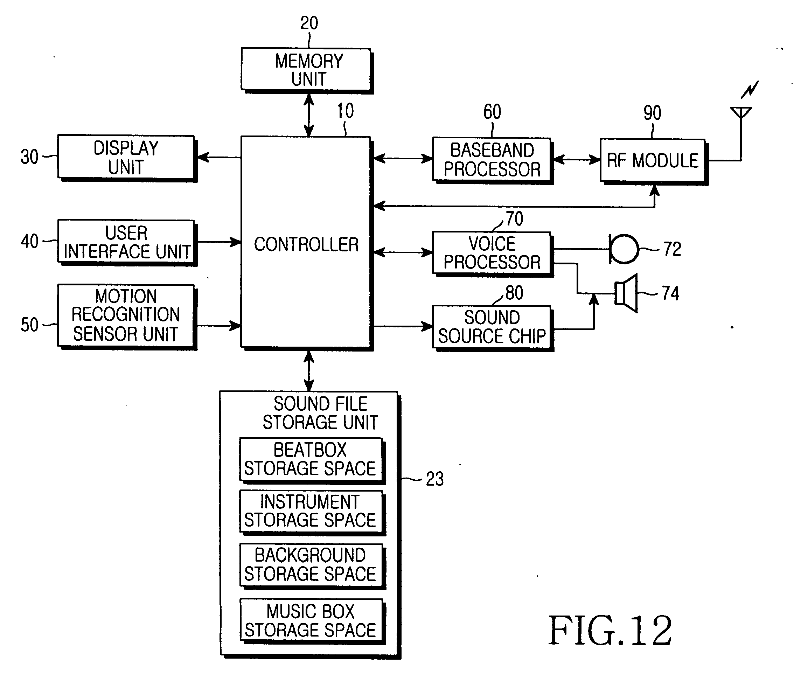

FIG. 12 is a block diagram of the mobile communication terminal according to another preferred embodiment of the present invention.

As compared with the construction of FIG. 1, FIG. 12 shows the detailed construction for the sound file storage unit 22 (hereinafter, referred to as sound file storage unit 23). Hereinafter, relating operations of main elements in the sound file storage unit 23 will be described based on the detailed construction for the sound file storage unit 23 as illustrated in FIG. 12.

The sound file storage unit 23 for storing music information relating to the play may include an area (beatbox storage space) for storing types of a beatbox, an area (instrument storage space) for storing the original instrument and "My Instrument" customized by a user, an area (background storage space) for storing preset information (e.g., musical notes or color based on progress of the play, avatars, etc) according to predetermined conditions for display of a background scene, an area (music box storage space) for storing tune information (musical notes and words) for play of a music box, etc.

The display unit 30 displays a screen (menu screen) for changing beatbox type, instrument type and volume, a beatbox-listening screen, and a beatbox-imitation screen. User input required for using functions for learning the beatbox is accomplished through a user interface unit 40. A controller 10 controls a corresponding menu screen to be displayed on the display unit 30 in response to the input through the user interface unit 40. The controller 10 controls the beatbox-learning-setting, the beatbox-learning-play, the "My Instrument" customization, the "My Instrument" check, the beatbox-play, etc. Further, the controller 10 controls the played beats to be varied based on the motion of the mobile communication terminal detected by the motion recognition sensor unit 50 in a state where a beatbox-imitation screen has been displayed.

Although the present embodiment includes music information relating to the beatbox or the music box for illustrative purposes, the present embodiment may include only one of the music information relating to the beatbox and the music information relating to the music box, or may include other music information.

When predetermined sounds are output from the beatbox or the music box, background colors may be varied.

When the user commands performance of a music box function through the user interface unit 40, the controller 10 detects the user's command and controls a list screen of tunes to be played by the music box to be displayed on the display unit 30 so that the user may select predetermined tunes. Herein, when the tune selected by the user is a tune (e.g., "Voices Of Spring, Waltz" by Johann Strauss) having only musical notes without words, a background scene displayed on the display unit 30 may have a color corresponding to the musical notes of the tune as the corresponding tune continues to be played. Information on the color may be retrieved from the background scene storage space. Herein, the corresponding tune is played by the musical note. Whether to play the next musical notes is determined if the motion recognition sensor unit 50 has detected the motion of the mobile communication terminal. In other words, the musical notes of a tune to be played by the music box are predetermined, but the tune is played and the beat changes only when the user shakes the terminal, similarly to a beatbox as described later. That is, a motion detection interval corresponds to a play interval and a beat. In other words, whenever the motion of the terminal is detected, sounds corresponding to the musical notes of a played tune are output in sequence one by one. Further, because the selected tune does not have words, a specific avatar may be displayed on a background scene. For example, when the musical note includes "sol-sol-la-la-sol-sol-mi", it is possible to change the color of the background scene in the sequence of red, red, blue, blue, red, red and yellow.

When a tune with words is selected, the controller 10 controls the display unit 30 to display a predetermined quantity of words of the tune to be displayed on the background scene. In this state, the controller 10 controls the tune to be played by the musical note and simultaneously controls display types of letters (letters of the words) corresponding to each musical note to be varied whenever the motion of the mobile communication terminal is detected by the motion recognition sensor unit 50. Herein, the display type may be variously embodied by flickering, colors, etc.

In a detailed example for the latter case, when it is assumed that a musical note "mi" is set as a yellow color and a musical note "pa" is set as a blue color, in a state where the words "Are You Sleeping?" are displayed with a black color on the screen and electronic sounds of the musical note "pa" corresponding to the words "You" is currently output, the words "Are You" have colors of yellow and blue because musical notes of the words "Are You" correspond to "mi pa" respectively, and the next word "Sleeping" maintains the black color. In another example, it is also possible to allow the words "Are You" to have a red color and the next word "Sleeping" to maintain a black color. This is a simple case where the colors of the words change according to whether the play is performed.

In the beatbox, different colors are output to the background scene when the terminal is shaken and thus predetermined sounds are output from sound sources and when the terminal is not shaken and thus the predetermined sounds are not output (no sound sources). For example, when the predetermined sounds are output, a red color is output. However, when the, predetermined sounds are not output, it is possible to change a color in a predetermined sequence or maintain one color other than the red color. Further, in the beatbox, when the terminal is not shaken, beatbox play is not accomplished because the predetermined sounds are not output. However, when the terminal is shaken, the beatbox play is accomplished because the predetermined sounds are output according to the shake.

The motion recognition sensor unit 50 is a sensor for measuring information about motion of an object. The motion recognition sensor unit 50 incorporates an acceleration sensor for measuring acceleration in order to calculate a change in positions of the object, and an angular velocity sensor (also known as a gyroscope) for measuring angular velocity in order to calculate a change in a rotation angle of the object. In realizing the preferred embodiment of the present invention, the acceleration sensor or the angular velocity sensor may be used as described below but the subject matter of the present invention is not limited to the sensor itself.

There are various methods for detecting time points at which the terminal is shaken by means of the acceleration sensor. The shaking motion may cause a rapid change in acceleration. The rapid change in acceleration may be expressed by an acceleration having a large slope on a time axis. When a predetermined threshold value has been set for a slope and a slope of a measured acceleration has exceeded this threshold value, it may be determined that the shake has been detected. In another method, the shaking motion greatly increases an acceleration value. When a predetermined threshold value has been set for the acceleration value and a measured acceleration value has exceeded this threshold value, it may be determined that a shake has been detected. In yet another method, it may be determined that the shake has been detected by applying the above two methods.

There are various methods for detecting time points at which the terminal is shaken by means of the angular velocity sensor. The shaking motion causes a rapid change in angular velocity. The rapid change in the angular velocity may be shown as a large slope of the angular velocity on a time axis. When a predetermined threshold value for a slope has been set and a slope of a measured angular velocity has exceeded this threshold value, it may be determined that the shake has been detected. In another method, the shaking motion greatly increases an angular velocity value. When a predetermined threshold value for the angular velocity value has been set and a measured angular velocity value has exceeded this threshold value, it may be determined that the shake has been detected. In further another method, it may be determined that the shake has been detected by applying the above two methods.

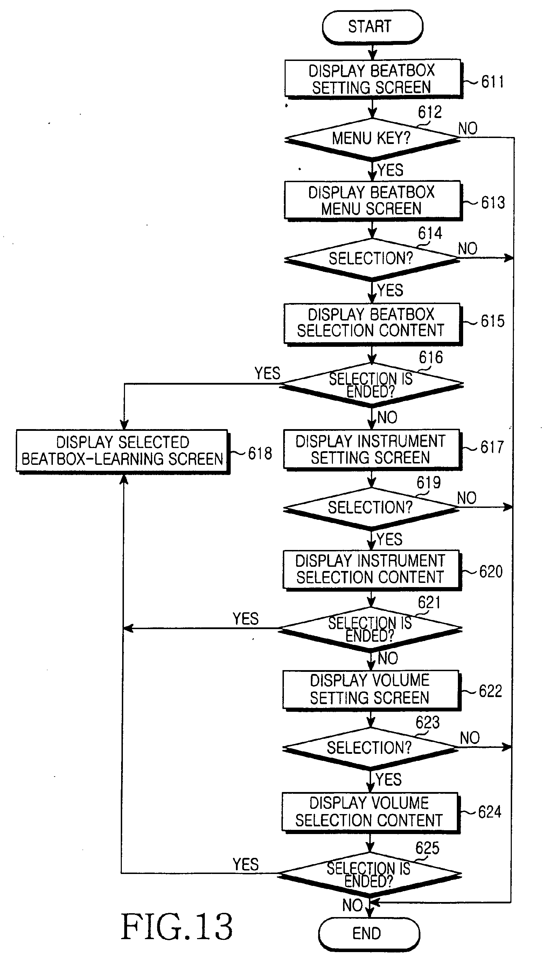

FIG. 13 is a flow diagram illustrating a beatbox-learning-setting method in the mobile communication terminal according to a preferred embodiment of the present invention.

In step 611, the controller 10 controls a beatbox-setting screen to be displayed. In step 612, the controller 10 determines if a menu key is input. As a result of the determination, when the menu key input is detected, the controller 10 controls a beatbox-menu screen to be displayed in step 613. In step 614, the controller 10 determines if a user has selected one of beatbox items displayed on the screen. The user may select the item by inputting the up and the down direction key and the confirmation key as illustrated in FIG. 7. When the selection is detected, the controller 10 displays the contents of the selected beatbox in step 615. In step 616, the controller 10 determines if the selection has been ended. When the selection has been ended, the controller 10 controls a selected beatbox-learning screen to be displayed in step 618.

However, when the selection has not been ended, the controller 10 controls an instrument setting screen to be displayed in step 617. In step 619, the controller 10 determines if the user has selected one of the instruments displayed on the screen. In the afore described FIG. 7, an instrument selection intermediate process is omitted. However, it is natural that the user may select the instrument by inputting the menu key, the up and the down direction key and the confirmation key, similarly to the case of selecting the beatbox. When the instrument selection is detected, the controller 10 displays the contents of the selected instrument in step 620. In step 621, the controller 10 determines if the selection has been ended. When the selection has been ended, the controller 10 controls the selected beatbox-learning screen to be displayed in step 618.

However, when the selection has not been ended, the controller 10 controls a volume setting screen to be displayed in step 622. In step 623, the controller 10 determines if the user has selected one of the instruments displayed on the screen. In the afore described FIG. 7, a volume selection intermediate process is omitted. However, it is natural that the user may select volume by inputting the right and the left direction key and the confirmation key. When the volume selection is detected, the controller 10 displays the contents of the selected volume in step 624. In step 625, the controller 10 determines if the selection has been ended. When the selection has been ended, the controller 10 controls the selected beatbox-learning screen to be displayed in step 618.

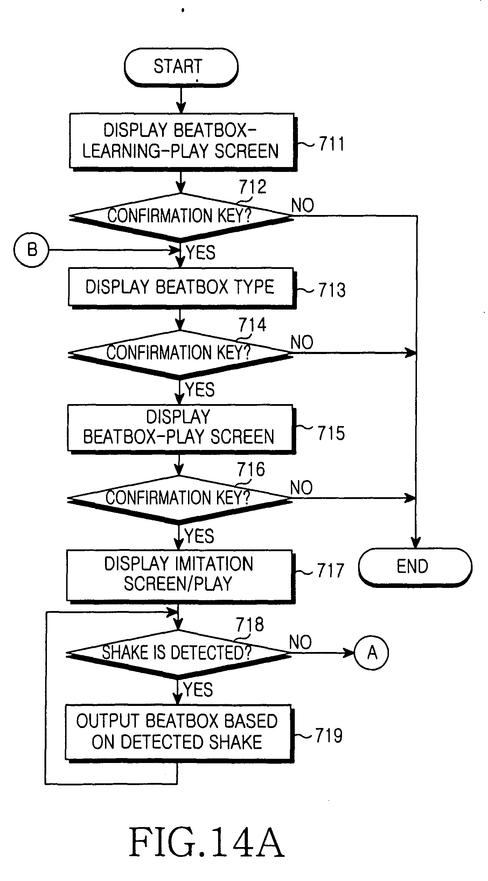

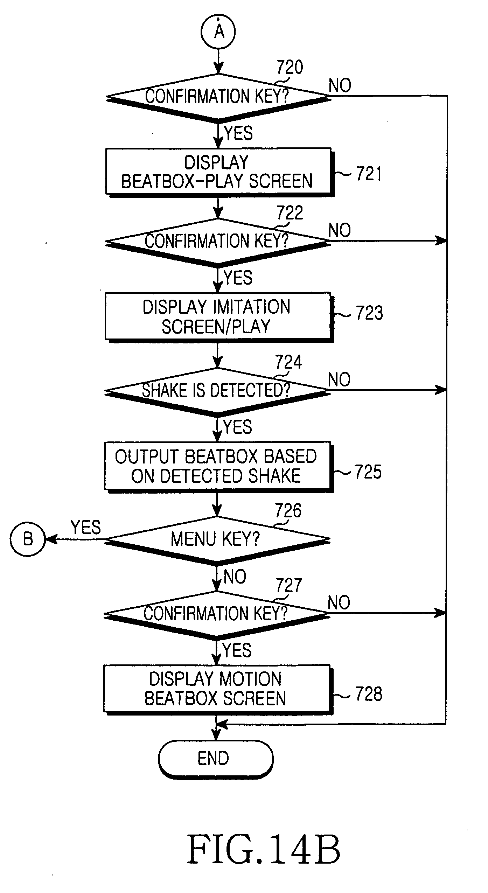

FIGs. 14A and 14B are flow diagrams illustrating a beatbox-learning-play method in the mobile communication terminal according to a preferred embodiment of the present invention.

In step 711 of FIG. 14A, the controller 10 controls a beatbox-learning-play screen to be displayed. In step 712, the controller 10 determines if the confirmation key is input. When the confirmation key input is detected, the controller 10 displays types of the beatbox in step 713. In step 714, the controller 10 determines if the confirmation key is input. When the confirmation key input is detected, the controller 10 displays a beatbox-play screen in step 715. In step 716, the controller 10 determines if the confirmation key is input. When the confirmation key input is detected, the controller 10 displays an imitation screen and plays the beatbox in step 717. In step 718, the controller 10 determines if a shake of the terminal is detected by the motion recognition sensor unit 50. When the shake of the terminal is detected, the controller 10 outputs a beatbox according to the detected shake in step 719.

However, when the shake of the terminal is not detected, the controller 10 determines if the confirmation key input is detected in step 720 of FIG. 14B. When the confirmation key input is detected, the controller 10 displays the beatbox-play screen in step 721. In step 722, the controller 10 determines if the confirmation key is input. When the confirmation key input is detected, the controller 10 displays the imitation screen and plays the beatbox in step 723. In step 724, the controller 10 determines if the shake of the terminal is detected by the motion recognition sensor unit 50. When the shake of the terminal is detected, the controller 10 outputs the beatbox according to the detected shake in step 725. In step 726, the controller 10 determines if the menu key is input. When the menu key input is detected, returns to step 713 of FIG. 14A in order to allow the types of the beatbox to be displayed.

However, when the menu key input is not detected in step 726, the controller 10 determines if the confirmation key is input in step 727. When the confirmation key input is detected, the controller 10 displays the motion-beatbox screen and ends the procedure.

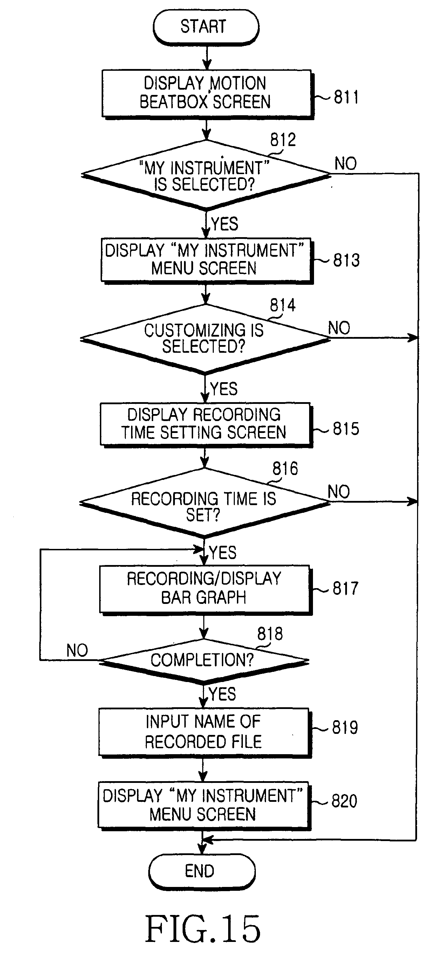

FIG. 15 is a diagram illustrating a method for customizing "my instrument" in the mobile communication terminal according to a preferred embodiment of the present invention.

In step 811, the controller 10 controls a motion-beatbox menu screen to be displayed. In step 812, the controller 10 determines if a "My Instrument" item has been selected. When it is determined that the "My Instrument" item has been selected, the controller 10 controls a "My Instrument" menu screen to be displayed in step 813. In step 814, the controller 10 determines if a "Customizing" sub-item has been selected. When the "Customizing" sub-item has been selected, the controller 10 controls a recording time setting screen to be displayed in step 815. In step 816, the controller 10 determines if the recording time has been set. When it is detected that the recording time has been set, the controller 10 controls prepares recording and displays a bar graph in step 817. When the recording preparation is ended, the recording starts. In step 818, the controller 10 determines if the recording has been completed. When the recording has been completed, the controller 10 inputs the name of a recorded file in step 819. Further, in step 820, the controller 10 stores the recorded file to have the input name and controls the "My Instrument" menu screen to be displayed.

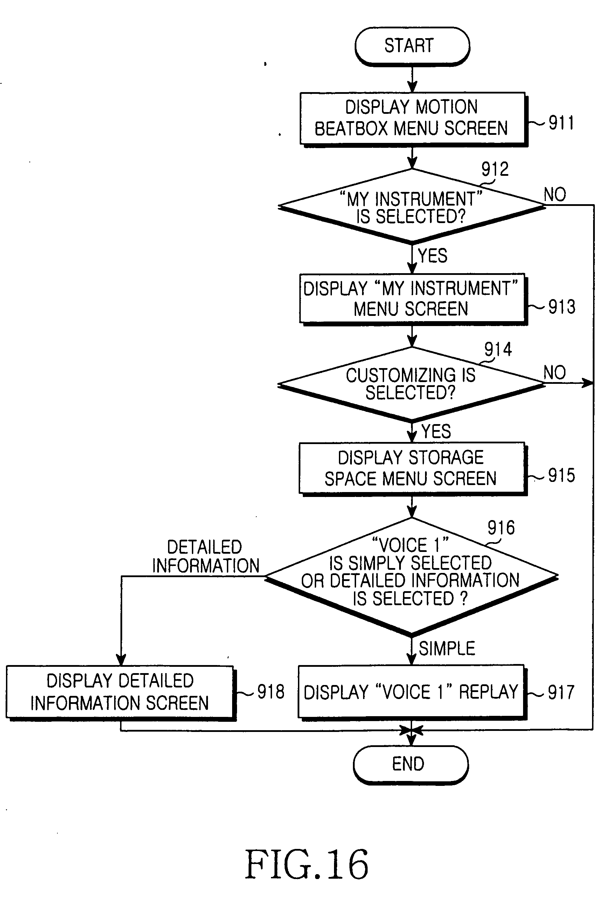

FIG. 16 is a diagram illustrating a method for checking "My Instrument" in the mobile communication terminal according to a preferred embodiment of the present invention.

In step 911, the controller 10 controls the motion-beatbox menu screen to be displayed. In step 912, the controller 10 determines if the "My Instrument" item has been selected. When it is determined that the "My Instrument" item has been selected, the controller 10 controls the "My Instrument" menu screen to be displayed in step 913. In step 914, the controller 10 determines if the storage space has been selected. When the storage space has been selected, the controller 10 controls a storage-space-menu screen to be displayed in step 915. In step 916, the controller 10 determines if the "Voice 1" sub-item has been simply selected or the detailed information of the "Voice 1" sub-item has been selected. When the "Voice 1" sub-item has been simply selected, the controller 10 displays a "Replay Of The Voice 1" in step 917. However, when the detailed information has been selected, the controller 10 controls a detailed information screen to be displayed in step 918.

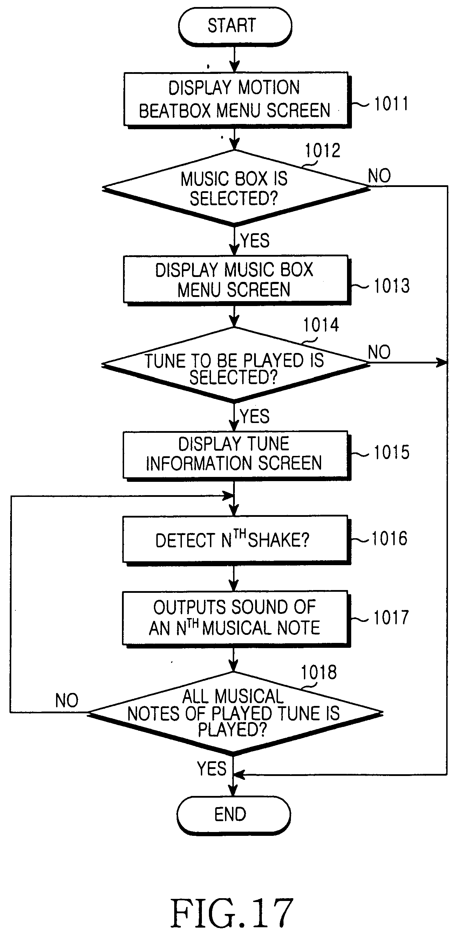

FIG. 17 is a diagram illustrating a music-box-play method in the mobile communication terminal according to a preferred embodiment of the present invention.

In step 1011, the controller 10 controls the motion-beatbox menu screen to be displayed on the display unit 30. In step 1012, the controller 10 determines if a music box item has been selected. When it is determined that the music box item has been selected, the controller 10 controls a music-box-menu screen to be displayed on the display unit 30 in step 1013. In step 1014, the controller 10 determines if a user has selected one of tunes displayed on the music-box-menu screen. When a predetermined tune has been selected, the controller 10 controls a tune information screen of the selected tune to be displayed on the display unit 30 in step 1015. After displaying the tune information screen, the controller 10 detects an n^{th} shake of the terminal in step 1016 and outputs sounds of an n^{th} musical note of the tune in step 1017. In step 1018, the controller 10 determines if all musical notes of the tune has been played in step 1018. When all musical notes have been played, the procedure ends. However, when all musical notes have not been played, control flow returns to step 1016.

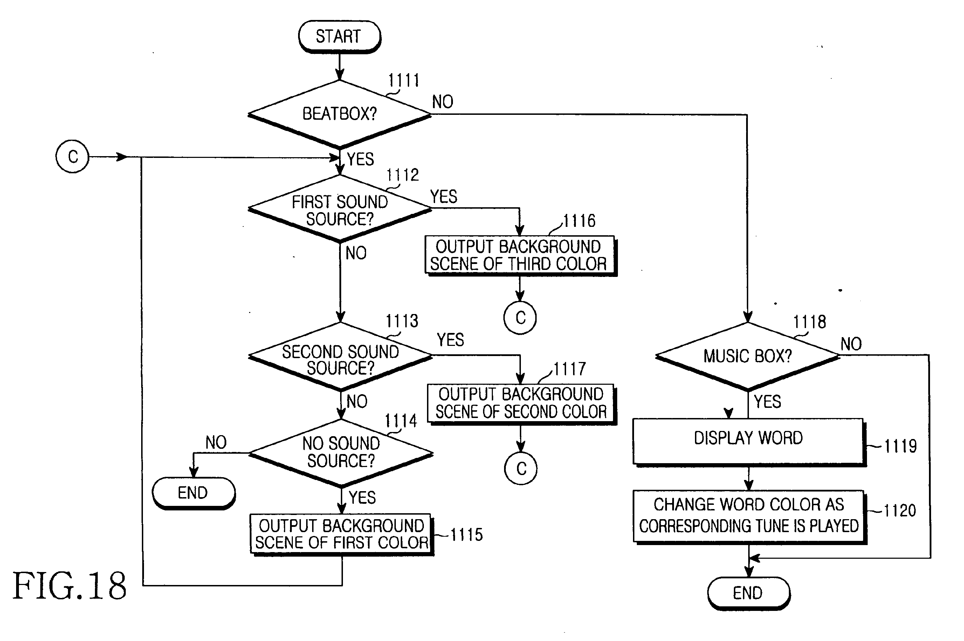

FIG. 18 is a diagram illustrating a method for changing the background scene in the mobile communication terminal according to a preferred embodiment of the present invention.

In step 1111, the controller 10 determines if a current mode is a beatbox-learning-play mode. When the current mode is the beatbox-learning-play mode, the controller 10 determines if sounds are output from a first sound source in step 1112. When the sounds are output from the first sound source, the controller 10 outputs a background scene of a third color in step 1116. However, when the sounds are not output from the first sound source, the controller 10 determines if the sounds are output from a second sound source in step 1113. When the sounds are output from the second sound source, the controller 10 outputs a background scene of a second color in step 1117. However, when the sounds are not output from the second sound source, the controller 10 determines if a sound source exists in step 1114. When there is no sound source, the controller 10 outputs a background scene of the first color in step 1115.

Each play depends on whether the motion of the terminal is detected. Further, because a relation between the motion detection and the play has been sufficiently described in FIGs. 14A and 14B and FIG. 17, the detailed description will be omitted.

Referring to FIG. 7 or FIG. 8, because there exists one window used for selecting an instrument, the number of selectable instruments is restricted. However, in a simple play function rather than a learning function, two or more instruments can be selected. For example, in an actual play, a "kung-gi duk" of a "kung-gi duk kung" may be output as sounds of a small drum and a "kung" of the "kung-gi duk kung" may be output as sounds of a large drum according to whether a specific button is pressed the moment the terminal is shaken. In the shown example, the first sound source and the second sound source represent sounds of different instruments.

When it is determined that the current mode is not the beatbox-learning-play mode in step 1111, the controller 10 determines if the current mode is a music-box-play mode in step 1118. When it is determined that the current mode is the music-box-play mode, the controller 10 displays words of a selected tune on the screen in step 1119. In step 1120, the controller 10 plays sounds corresponding to the musical notes of the correspondent tune and simultaneously changes the color of letters corresponding to the musical notes from the first color (e.g., FIG. 11 5(c)) to another color (e.g., FIG. 11 5(d) and 5(e)) whenever a shake is detected.

Further, in a state where the musical notes of the corresponding tune are played one by one whenever the shake is detected, it is also possible to output a background scene with colors according to each musical note with reference to the background storage space of the sound file storage unit 23.

Further, in a state where a tune has been selected and then a predetermined quantity of words with one color have been displayed on the screen, it is also possible to change the color of letters corresponding to currently played musical notes to a color corresponding to the musical notes.

Furthermore, it is also possible to play a plurality of musical notes simultaneously or sequentially whenever the shake of the terminal is detected. In this way, it is possible to adaptively achieve chord play or a predetermined interval (e.g., phrase) play based on the detection of the shake. For example, in a state where melodies and chords for a predetermined tune are stored in the sound file storage unit 23 in advance, when a user shakes the terminal once, one sound and a chord corresponding to the sound can be played. In another embodiment, in a state where only chords for a predetermined tune are stored in the sound file storage unit 23 in advance, it is possible to play the tune by one chord whenever a user shakes the terminal once. This case can be used when a user wants to directly sing a song and simultaneously play chords of the song based on the shake of the terminal. In yet another embodiment, in a state where a predetermined tune is separately stored by the phrase in the sound file storage unit 23 in advance, it is possible to sequentially play the tune by one phrase whenever a user shakes the terminal.

According to the present invention as described above, sounds dependent on a motion of a mobile communication terminal are output, so that a user can control the motion of the mobile communication terminal and change and output the sounds vividly as if the user actually plays an instrument. Further, according to the present invention, a user can customize "My Instrument" and store the "My Instrument" in a mobile communication terminal, so that sound sources can be selected and types of a beatbox can also be selected. Therefore, it is possible to be more interesting in a beatbox play. In other words, the present invention allows a user to select various beatboxes and various sound sources in a "Customizing My Instrument", so that it is possible to provide beatbox environments preferred by each user. Furthermore, according to the present invention, a color of a background scene can change variously during a sound function such as a beatbox play and a music box play, so that it is possible to provide a user with visual entertainment as well as auditory entertainment. Therefore, the entertainment can be doubled.

While the present invention has been shown and described with reference to certain preferred embodiments thereof, it will be understood by those skilled in the art that various changes in form and details may be made therein without departing from the scope of the present invention as defined by the appended claims. For example, in the above detailed description, a case where sounds are output in response to a reciprocating motion of a mobile communication terminal is described as an example. However, it will be understood by those skilled in the art that the present invention can be applied when all motions of a mobile communication terminal exist. For example, even when a mobile communication terminal moves in only one direction, the present invention can be realized so that sounds dependent on the motion can be output. Further, a played tune can be stored in a memory and can be reproduced later.

## Claims

1. An apparatus for controlling music play in a mobile communication terminal, the apparatus comprising:
a motion recognition sensor unit for detecting a motion of the mobile communication terminal and outputting detection signals;
a sound source chip for outputting sound; and
a controller for receiving the detection signals from the motion recognition sensor unit, calculating motion values of the mobile communication terminal, and controlling the sound source chip to output sounds dependent on the calculated motion values.

2. The apparatus as claimed in claim 1, wherein the motion recognition sensor unit includes one of an acceleration sensor and a gyro sensor for detecting a reciprocating motion in a back and forth direction or a right and a left direction of the mobile communication terminal.

3. The apparatus as claimed in claim 1 or 2, wherein the controller determines a reciprocating motion of the mobile communication terminal by means of the detection signals, and controls sounds of a predetermined percussion instrument to be output through the sound source chip according to the determined reciprocating motion.

4. The apparatus as claimed in one of claims 1 to 3, wherein the controller determines a reciprocating motion of the mobile communication terminal by means of the detection signals, and controls sounds corresponding to each note of a predetermined sound file music to be output through the sound source chip in sequence according to the determined reciprocating motion.

5. A method for controlling music play in a mobile communication terminal, the method comprising the steps of:
determining if a motion of the mobile communication terminal exists;
calculating motion values of the mobile communication terminal when the motion of the mobile communication terminal exists; and
outputting sounds dependent on the calculated motion values.

6. The method as claimed in claim 5, wherein the motion includes a reciprocating motion in a back and forth direction or a right and a left direction of the mobile communication terminal.

7. The method as claimed in claim 5 or 6, further comprising:
determining a reciprocating motion of the mobile communication terminal by means of detection signals; and
outputting sounds of a predetermined percussion instrument when the reciprocating motion of the mobile communication terminal exists.

8. The method as claimed in one of claims 5 to 7, further comprising:
determining a reciprocating motion of the mobile communication terminal by means of detection signals; and
outputting sounds corresponding to each note of a predetermined sound file music to be output through a sound source chip in sequence when the reciprocating motion of the mobile communication terminal exists.

9. An apparatus for controlling music play in a mobile communication terminal, the apparatus comprising:
a user interface for user input required for the music play;
a display unit for displaying an information screen for music to be played;
a motion recognition sensor unit for instantaneously detecting a motion of the mobile communication terminal;
a sound file storage unit including an area for storing at least one music information;
a controller for controlling corresponding music to be played according a motion of the mobile communication terminal detected by the motion recognition sensor unit; and
a speaker for outputting sounds of the played music.

10. The apparatus as claimed in claim 9, wherein the music play includes beatbox play, the music information stored in the sound file storage unit includes types of a beatbox, and the controller detects user input required for using a beatbox-learning function through the user interface, controls a screen based on execution of the beatbox-learning function to be displayed on the display unit, and controls the beatbox to be played according to the motion of the mobile communication terminal detected by the motion recognition sensor unit.

11. The apparatus as claimed in claim 10, wherein the controller controls a beatbox-setting screen, a beatbox-listening screen, and a beatbox-imitating screen to be displayed on the display unit, controls the beatbox to be played on the beatbox-listening screen according to setting input detected on the beatbox-setting screen, and controls the beatbox to be played according to the motion of the mobile communication terminal detected by the motion recognition sensor unit in a state where the beatbox-imitating screen is displayed.

12. The apparatus as claimed in one of claims 9 to 11, wherein the display unit further displays a screen used for changing types of the beatbox.

13. The apparatus as claimed in one of claims 9 to 11, wherein the display unit further displays a screen used for changing types of an instrument.

14. The apparatus as claimed in one of claims 9 to 11, wherein the display unit further displays a screen used for changing volume.

15. The apparatus as claimed in claim 11, wherein the controller controls the beatbox-listening screen to be displayed while outputting one bar of the selected beatbox so that a user can hear the beatbox in advance, and controls the beatbox-imitating screen to be displayed while outputting beats as the user continues to imitate the bar.

16. The apparatus as claimed in one of claims 9 to 15, wherein the music information includes both a "my instrument" file customized by a user and at least one instrument data, and the controller controls a recording for storing the "my instrument" file in a memory.

17. The apparatus as claimed in claim 16, further comprising a microphone for converting sounds for the recording into electrical signals, and wherein the controller controls a screen for selecting recording time, a screen for displaying a progress status of the recording after the recording time is selected, and a screen for requiring input of an instrument name to be assigned to a storage file when the recording is completed to be displayed on the display unit.

18. The apparatus as claimed in claim 17, wherein the controller controls passage of the recording time to be shown by displaying a bar graph on the screen for displaying the progress status.

19. The apparatus as claimed in claim 16, wherein the controller displays a screen for displaying types of a stored instrument, displays a screen for displaying contents of an instrument selected by a user, and controls sounds of the corresponding instrument to be output, thereby allowing the "my instrument" file to be checked.

20. The apparatus as claimed in one of claims 9 to 19, wherein the sound file storage unit further comprises an area for storing preset background scene colors according to predetermined conditions.

21. The apparatus as claimed in claim 20, wherein, when the beatbox is played, the controller controls the background scene color to be differently displayed according to types of sound sources, or existence or absence of the sound sources.

22. The apparatus as claimed in one of claims 9 to 21, wherein the music play includes music-box play, the music information stored in the sound file storage unit includes at least one tune for the music-box play, and the controller detects user input required for using a music-box function through the user interface, controls an information screen for a tune selected for play to be displayed on the display unit, and controls sounds corresponding to musical notes of the selected tune to be sequentially output whenever the motion of the mobile communication terminal is detected by the motion recognition sensor unit.

23. The apparatus as claimed in claim 22, wherein the sound file storage unit further comprises an area for storing colors corresponding to the musical notes, and the controller controls a predetermined quantity of words of a tune to be played to be displayed on the display unit, and controls each letter of the words to have the colors corresponding to the musical notes of the tune as the tune continues to be played, when the music-box function is selected.

24. The apparatus as claimed in claim 22, wherein the sound file storage unit further comprises an area for storing colors corresponding to play status, and the controller controls a predetermined quantity of words of a tune to be played to be displayed with a first color on the display unit, and controls each letter of the words to have a second color as the tune continues to be played, when the music-box function is selected.

25. The apparatus as claimed in claim 22, wherein the sound file storage unit further comprises an area for storing colors corresponding to musical notes, and the controller controls a background scene displayed on the display unit to have colors corresponding to musical notes of the tune as the tune continues to be played, when the music-box function is selected.

26. The apparatus as claimed in one of claims 9 to 25, wherein the music play includes music-box-play, the music information stored in the sound file storage unit includes at least one tune for the music-box-play, and the controller detects user input required for using a music box function through the user interface, controls an information screen for a tune selected for play to be displayed on the display unit, and controls sounds corresponding to at least two musical notes of the selected tune to be simultaneously output whenever the motion of the mobile communication terminal is detected by the motion recognition sensor unit.

27. The apparatus as claimed in one of claims 9 to 25, wherein the music play includes music-box-play, the music information stored in the sound file storage unit includes at least one tune for the music-box-play, and the controller detects user input required for using a music box function through the user interface, controls an information screen for a tune selected for play to be displayed on the display unit, and controls sounds corresponding to musical notes corresponding to predetermined intervals of the selected tune to be sequentially output whenever the motion of the mobile communication terminal is detected by the motion recognition sensor unit.

28. An apparatus for controlling music play in a mobile communication terminal, the apparatus comprising:
a display unit for displaying a beatbox-setting screen, a beatbox-listening screen, and a beatbox-imitating screen;
a speaker for outputting sounds of the beatbox;
a user interface for user input required for using a beatbox-learning function;
a motion recognition sensor unit for instantaneously detecting a motion of the mobile communication terminal;
a sound file storage unit including an area for storing types of the beatbox; and
a controller for controlling a screen based on execution of the beatbox-learning function to be displayed on the display unit, and controlling the beatbox to be played according to a motion of the mobile communication terminal detected by the motion recognition sensor unit in a state where the beatbox-imitating screen is displayed.

29. An apparatus for controlling music play in a mobile communication terminal, the apparatus comprising:
a user interface for user input required for using a music-box function;
a display unit for displaying an information screen for play;
a motion recognition sensor unit for instantaneously detecting a motion of the mobile communication terminal;
a sound file storage unit including an area for storing at least one tune; and
a controller for controlling sounds corresponding to musical notes of the tune to be sequentially output whenever the motion of the mobile communication terminal is detected by the motion recognition sensor unit, after the music box function is selected.

30. A method for controlling music play in a mobile communication terminal, the method comprising the steps of:
displaying a screen for changing beatbox setup; and
displaying a screen for guiding a user to learn a beatbox while outputting the beatbox according to a corresponding state when a play command is input in a state where the beatbox has been set or in an initial setting state.

31. The method as claimed in claim 30, further comprising customizing a "my instrument" file by storing sounds recorded in advance by a user in a form of a file, wherein at least one "my instrument" file is included in types of an instrument.

32. The method as claimed in claim 31, wherein customizing the "my instrument" file comprises the steps of:
displaying a screen for selecting recording time;
displaying a screen for displaying a progress status of a recording after the recording time is selected;
displaying a screen for requiring input of an instrument name when the recording is completed; and
assigning the input instrument name to recording contents for storage.

33. The method as claimed in claim 32, further comprising checking the "my instrument" file, the checking step includes:
displaying a screen for showing types of a storage instrument;
detecting selection of the instrument; and
displaying a screen for showing contents of the selected instrument and outputting sound of the corresponding instrument.

34. The method as claimed in claim 33, further comprising displaying a screen for showing detailed information of the selected instrument and outputting the sounds of the corresponding instrument.

35. The method as claimed in one of claims 30 to 34, wherein the step of displaying a screen for guiding a user to learn a beatbox comprises:
displaying a corresponding screen while outputting a bar of the selected beatbox so that a user can hear the bar in advance; and
displaying a corresponding screen while outputting beats according to the user's imitation of the bar.

36. A method for controlling music play in a mobile communication terminal, the method comprising the steps of:
displaying a screen for selecting a tune to be played by a music box;
displaying an information screen for the selected tune; and
outputting sounds corresponding to musical notes of the tune whenever a motion of the mobile communication terminal is detected.

37. The method as claimed in claim 36, wherein the information screen is a screen in which a predetermined quantity of words of a tune to be played are displayed with a first color, and each word has a second color as the tune continues to be played.

38. The method as claimed in claim 36, wherein the information screen is a screen in which a predetermined quantity of words of a tune to be played are displayed, and each word has colors corresponding to the musical notes of the tune as the tune continues to be played.

39. The method as claimed in claim 36, further comprising controlling the information screen to have colors corresponding to the musical notes of the tune as the tune continues to be played.

40. The method as claimed in claim 36, further comprising simultaneously outputting sounds corresponding to at least two musical notes of the selected tune whenever the motion of the mobile communication terminal is detected.

41. The method as claimed in claim 36, further comprising sequentially outputting sounds corresponding to musical notes corresponding to predetermined intervals of the selected tune whenever the motion of the mobile communication terminal is detected.
